# EUROPÄISCHE PATENTANMELDUNG

(11) **EP 4 068 011 A1**
(43) Veröffentlichungstag der Anmeldung: **05.10.2022**
(21) Anmeldenummer: 21166569.0
(22) Anmeldetag: 01.04.2021
(51) Int. Cl.: G05B 13/02, G05B 17/02

(54) **MASCHINENSTEUERUNG SOWIE VERFAHREN ZUM KONFIGURIEREN DER MASCHINENSTEUERUNG**

(71) Anmelder: Siemens Aktiengesellschaft, 80333 München (DE)
(72) Erfinder: Hartmann, Dirk, 85617 Aßling (DE); Köhler, Felix, 81377 München (DE); Papadopoulos, Theodoros, 80333 München (DE)

(57) **Zusammenfassung**

Zum Konfigurieren einer Maschinensteuerung (CTL) für eine Maschine (M) wird eine Vielzahl von Zustandssignalen (ZS) eines ersten Zustandsraums (S1) eingelesen, denen jeweils ein optimiertes Steuersignal (AS) zugeordnet ist. Anhand der Vielzahl von Zustandssignalen (ZS) wird ein erster Signalumsetzer (T1) darauf trainiert, Zustandssignale (ZS) aus dem ersten Zustandsraum (S1) in einen demgegenüber dimensionsreduzierten, zweiten Zustandsraum (S2) zu reduzierten Zustandssignalen (ZSR) umzusetzen, wobei ein Informationsverlust minimiert wird. Weiterhin wird ein zweiter Signalumsetzer (T2) durch Zusammensetzen einer Umsetzregel (R) aus diskreten Regelelementen (+,*,EXP,...) darauf trainiert, durch Umsetzen von reduzierten Zustandssignalen (ZSR) mittels der Umsetzregel (R) korrespondierende optimierte Steuersignale (AS) zu reproduzieren. Damit wird die Maschinensteuerung (CTL) dazu eingerichtet, ein Zustandssignal (ZS) der Maschine (M) durch den trainierten ersten Signalumsetzer (T1) in ein reduziertes Zustandssignal (ZSR) und dieses durch den trainierten zweiten Signalumsetzer (T2) in ein optimiertes Steuersignal (AS) umzusetzen, mittels dessen die Maschine (M) gesteuert wird.

## Beschreibung

Zur Steuerung komplexer Maschinen, wie z.B. Robotern, Fertigungsanlagen, Gasturbinen, Windturbinen, Verbrennungskraftmaschinen, gebäudetechnischen Anlagen oder infrastrukturtechnischen Anlagen werden oft sogenannte modelprädiktive Regelungen eingesetzt. Diese werden häufig auch als Model-Predictive-Control oder MPC bezeichnet. Bei einem MPC-Regler wird in Abhängigkeit von den Eingangsgrößen ein zukünftiges Verhalten einer zu steuernden Maschine simuliert, um abhängig davon ein dieses Verhalten optimierendes Ausgangssignal zu ermitteln. Die Durchführung einer geeigneten Simulation erfordert jedoch in vielen Fällen erhebliche Rechenressourcen, insbesondere bei Echtzeitanwendungen mit kurzen Reaktionszeiten.

Es ist bekannt, zur Senkung des Rechenbedarfs vorab eine Vielzahl von Simulationen für eine Vielzahl von unterschiedlichen Betriebsbedingungen auszuführen und anhand der Simulationsergebnisse explizite Regeln abzuleiten, die eine simulative Regelung ergänzen oder ersetzen. Eine Ableitung derartiger Regeln erfordert jedoch häufig einen hohen manuellen Aufwand.

Alternativ oder zusätzlich kann anhand von Simulationen ein datengetriebenes Maschinenlernmodell trainiert werden, das dann die simulative Regelung ergänzt oder ersetzt. Eine durch ein trainiertes Maschinenlernmodell vermittelte Regelungscharakteristik ist jedoch für einen Benutzer in der Regel kaum analytisch nachvollziehbar oder interpretierbar. Dies kann sich insbesondere dann als problematisch erweisen, wenn ein solcher Regler einer Zertifizierung bedarf.

Es ist Aufgabe der vorliegenden Erfindung, eine Maschinensteuerung zum Steuern einer Maschine sowie ein Verfahren zum Konfigurieren der Maschinensteuerung anzugeben, die eine effiziente oder flexiblere Steuerung der Maschine erlauben.

Gelöst wird diese Aufgabe durch ein Verfahren mit den Merkmalen des Patentanspruchs 1, durch eine Maschinensteuerung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Konfigurieren einer Maschinensteuerung für eine Maschine wird eine Vielzahl von jeweils einen Zustand der Maschine in einem ersten Zustandsraum spezifizierenden Zustandssignalen eingelesen, denen jeweils ein für den jeweiligen Zustand optimiertes Steuersignal zugeordnet ist. Die Maschine kann hierbei insbesondere ein Roboter, ein Motor, eine Fertigungsanlage, eine Gasturbine, eine Windturbine, eine Verbrennungskraftmaschine, eine gebäudetechnische Anlage, eine infrastrukturtechnische Anlage oder eine von deren Komponenten sein. Anhand der Vielzahl von Zustandssignalen wird ein erster Signalumsetzer darauf trainiert, Zustandssignale aus dem ersten Zustandsraum in einen demgegenüber dimensionsreduzierten, zweiten Zustandsraum zu reduzierten Zustandssignalen umzusetzen, wobei ein Informationsverlust minimiert wird. Unter einem Minimieren sei hier und im Folgenden auch eine Annäherung an ein Minimum verstanden. Entsprechend sein unter einem Optimieren hier und im Folgenden auch eine Annäherung an ein Optimum verstanden. Weiterhin wird ein zweiter Signalumsetzer durch Zusammensetzen einer Umsetzregel aus diskreten Regelelementen darauf trainiert, durch Umsetzen von reduzierten Zustandssignalen mittels der Umsetzregel korrespondierende optimierte Steuersignale zu reproduzieren. Damit wird die Maschinensteuerung dazu eingerichtet, ein Zustandssignal der Maschine durch den trainierten ersten Signalumsetzer in ein reduziertes Zustandssignal und dieses durch den trainierten zweiten Signalumsetzer in ein optimiertes Steuersignal umzusetzen, mittels dessen die Maschine gesteuert wird.

Zum Ausführen des erfindungsgemäßen Verfahrens sind eine Maschinensteuerung, ein Computerprogrammprodukt sowie ein vorzugsweise nichtflüchtiges computerlesbares Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Die Erfindung erlaubt es, eine explizite Umsetzregel für einen dimensionsreduzierten Zustandsraum zu generieren, mittels der eine Maschine in optimierter Weise gesteuert werden kann. Eine solche Umsetzregel kann im Unterschied zu datengetriebenen Maschinenlernmodellen in vielen Fällen durch einen Benutzer insbesondere als heuristische Regel interpretiert, nachvollzogen und/oder hinsichtlich ihrer Konsequenzen beurteilt werden. Dies ermöglicht in vielen Fällen eine flexible Analyse, Weiterentwicklung und/oder Zertifizierung einer hierdurch konfigurierten Maschinensteuerung.

Vorteilhafte Ausführungsformen und Weiterbildungen der Erfindung sind in den abhängigen Ansprüchen angegeben.

Gemäß einer vorteilhaften Ausführungsform der Erfindung kann ein Verhalten der Maschine für eine Vielzahl von Betriebsszenarien simuliert werden. Damit kann für einen jeweiligen simulierten Zustand der Maschine ein Steuersignal ermittelt werden, das ein hierdurch induziertes simuliertes Verhalten der Maschine insbesondere nach vorgegebenen Kriterien optimiert. Das ermittelte Steuersignal kann dann dem korrespondierenden Zustandssignal als optimiertes Steuersignal zugeordnet werden. Vorteilhafterweise können die Betriebsszenarien eine Vielzahl von Betriebsbedingungen und/oder Betriebszuständen der Maschine umfassen. Die Betriebsszenarien können insbesondere aus den Betriebsdaten der Maschine oder aus einer Datenbank extrahiert werden. Alternativ oder zusätzlich können die Betriebsszenarien synthetisch, insbesondere zufallsbasiert generiert werden. Zum Optimieren eines jeweiligen zustandsspezifischen Steuersignals kann für mehrere Varianten des Steuersignals jeweils ein hierdurch induziertes Verhalten der Maschine simuliert werden. Abhängig davon kann dann diejenige Variante als optimiertes Steuersignal selektiert werden, das zu einem besonders vorteilhaften Verhalten der Maschine führt. Gegebenenfalls kann ein jeweiliges optimiertes Steuersignal auch mittels einer Interpolation mehrerer vorteilhafter Steuersignalvarianten erzeugt werden.

Nach einer weiteren vorteilhaften Ausführungsform der Erfindung können die Zustandssignale durch den ersten Signalumsetzer vom ersten Zustandsraum linear in den zweiten Zustandsraum umgesetzt werden. Die lineare Umsetzung kann dabei insbesondere mittels einer Transformationsmatrix durchgeführt werden. Dabei kann ein ein jeweiliges Zustandssignal darstellender Vektor mit der Transformationsmatrix multipliziert werden, um einen ein reduziertes Zustandssignal darstellenden Vektor zu erhalten. Zum Training des ersten Signalumsetzers können die Matrixelemente der Transformationsmatrix und gegebenenfalls deren Zeilenanzahl als Parameter in einer Weise optimiert werden, dass der Informationsverlust minimiert wird. Zur effektiven Dimensionsreduktion sollte die Transformationsmatrix wesentlich mehr Spalten als Zeilen aufweisen. Da eine Verringerung der Zeilenanzahl aber in der Regel mit einer Vergrößerung des Informationsverlusts einhergeht, kann bei der Optimierung zusätzlich die Zeilenanzahl derart optimiert werden, dass der Informationsverlust nach einem vorgegebenen Kriterium noch akzeptabel bleibt. Als Kriterium kann beispielsweise vorgegeben werden, dass ein Reproduktionsfehler des zweiten Signalumsetzers einen vorgegebenen Schwellwert nicht überschreitet.

Vorzugsweise kann zum Training des ersten Signalumsetzers eine Hauptkomponentenanalyse bei der Vielzahl von Zustandssignalen durchgeführt werden. Damit kann der erste Signalumsetzer zum Abbilden von Zustandssignalen auf die gefundenen Hauptkomponenten der Zustandssignale eingerichtet werden. Auf diese Weise können sowohl Matrixelemente einer Transformationsmatrix als auch deren Zeilenzahl optimiert werden. Eine solche Hauptkomponentenanalyse wird häufig auch als Principal-Component-Analysis oder PCA bezeichnet. Zur Durchführung einer Hauptkomponentenanalyse stehen effiziente numerische Standardverfahren, wie z.B. Verfahren zur Singulärwertzerlegung zur Verfügung.

Nach einer weiteren vorteilhaften Ausführungsform der Erfindung kann bei der Hauptkomponentenanalyse ein jeweiliges Zustandssignal gemeinsam mit dem jeweils zugeordneten optimierten Steuersignal ausgewertet werden. Dies erweist sich in vielen Fällen als vorteilhaft, da auf diese Weise auch Korrelationen zwischen Zustandssignalen und Steuersignalen erkannt und zur Dimensionsreduktion genutzt werden können. Derartige Korrelationen sind häufig gegeben, insofern ein spezifisches Steuersignal in vielen Fällen eine spezifische Zustandsfolge hervorruft. Vorteilhafterweise kann eine Transformationsmatrix um zusätzliche Spalten zur Multiplikation mit einem ein Steuersignal darstellenden Vektor erweitert werden. Nach Durchführung der gemeinsamen Hauptkomponentenanalyse können dann die zusätzlichen Spalten der resultierenden Transformationsmatrix wieder entfernt werden.

Nach einer besonders vorteilhaften Ausführungsform der Erfindung können die diskreten Regelelemente numerische Operatoren umfassen. Zum Training des zweiten Signalumsetzers kann dann eine symbolische Regression mit den numerischen Operatoren durchgeführt werden. Die numerischen Operatoren können jeweils durch eine spezifische Operatorkennung, insbesondere durch ein Operatorsymbol kodiert werden. Als Operatoren können insbesondere Addition, Subtraktion, Multiplikation, Division, Potenzierung, Sinusfunktion, Cosinusfunktion oder andere diskrete mathematische oder numerische Operationen vorgesehen sein. Durch die symbolische Regression können die Operatoren derart zu einem insbesondere mathematischen Ausdruck zusammengesetzt werden, dass eine darauf basierende Umsetzung eines reduzierten Zustandssignals ein korrespondierendes optimiertes Steuersignal möglichst genau reproduziert.

Alternativ oder zusätzlich zur symbolischen Regression kann zum Training des zweiten Signalumsetzers auch eine polynomielle Regression durchgeführt werden. Vorzugsweise kann hierbei eine sogenannte Ridge-Polynom-Approximation verwendet werden, die sich insbesondere bei einer Kombination von Dimensionsreduktion und polynomieller Regression in vielen Fällen als sehr vorteilhaft erweist.

Darüber hinaus können zum Training des zweiten Signalumsetzers unterschiedliche Abfolgen von numerischen Operatoren generiert und die reduzierten Zustandssignale gemäß einer jeweiligen Abfolge in Ausgabesignale umgesetzt werden. Dabei kann eine Abfolge ermittelt werden, bei der ein Abstand der Ausgabesignale von den korrespondierenden optimierten Steuersignalen minimiert wird. Die Umsetzregel kann dann anhand der ermittelten Abfolge gebildet werden. Eine jeweilige Abfolge von numerischen Operatoren kann insbesondere als Graph, als Ausdrucksbaum oder als symbolischer mathematischer Ausdruck dargestellt, kodiert oder angegeben werden. In einer solchen Form ist eine Operatorabfolge oder eine resultierende Umsetzregel für einen Benutzer in der Regel besonders gut interpretierbar und damit auf flexible Weise weiter nutzbar.

Zum Training des zweiten Signalumsetzers kann insbesondere ein genetisches Optimierungsverfahren verwendet werden. Mittels derartiger genetischer Optimierungsverfahren lassen sich viele insbesondere diskrete Optimierungsaufgaben effizient lösen. Im vorliegenden Fall kann das Zusammensetzen der diskreten Regelelemente als diskrete Optimierungsaufgabe effizient gelöst werden. Zur Durchführung eines genetischen Optimierungsverfahrens steht eine Vielzahl von Implementierungen zur Verfügung.

Nach einer vorteilhaften Weiterbildung der Erfindung können für unterschiedliche Betriebsbedingungen der Maschine jeweils betriebsbedingungsspezifische Zustandssignale und/oder betriebsbedingungsspezifisch optimierte Steuersignale eingelesen werden. Eine Betriebsbedingung kann hierbei ein Betriebsszenario, eine einzuhaltende Nebenbedingung, einen einzuhaltenden Grenzwert und/oder eine Betriebseinschränkung betreffen. Für die unterschiedlichen Betriebsbedingungen kann dann anhand der jeweiligen betriebsbedingungsspezifischen Zustandssignale und/oder betriebsbedingungsspezifisch optimierten Steuersignale jeweils ein betriebsbedingungsspezifischer zweiter Signalumsetzer trainiert werden. Damit kann dann eine Betriebsbedingung der Maschine erfasst werden und abhängig davon einer der betriebsbedingungsspezifischen zweiten Signalumsetzer zum Steuern der Maschine selektiert werden. Auf diese Weise können mehrere für unterschiedliche Betriebsbedingungen optimierte zweite Signalumsetzer vorgehalten und abhängig von einer aktuellen Betriebsbedingung spezifisch eingesetzt werden.

Nach einer weiteren vorteilhafte Ausführungsform der Erfindung kann ein Maschinenlernmodul anhand von reduzierten Zustandssignalen darauf trainiert werden, synthetische reduzierte Zustandssignale zu generieren. Die synthetischen reduzierten Zustandssignale können dann zum Training des zweiten Signalumsetzers zusätzlich verwendet werden. Auf diese Weise kann das Training des zweiten Signalumsetzers in der Regel erheblich beschleunigt werden. Darüber hinaus wird in vielen Fällen ein Einfluss von statistischen Ausreißern in den Trainingsdaten verringert.

Ein Ausführungsbeispiel der Erfindung wird nachfolgend anhand der Zeichnung näher erläutert. Dabei veranschaulichen jeweils in schematischer Darstellung:
Figur 1 einen Fertigungsroboter mit einer erfindungsgemäßen Maschinensteuerung,
Figur 2 eine erfindungsgemäße Maschinensteuerung in einer Trainingsphase,
Figur 3 eine Umsetzung eines Zustandssignals von einem ersten Zustandsraum in einen dimensionsreduzierten, zweiten Zustandsraum und
Figur 4 eine Generierung von synthetischen reduzierten Zustandssignalen.

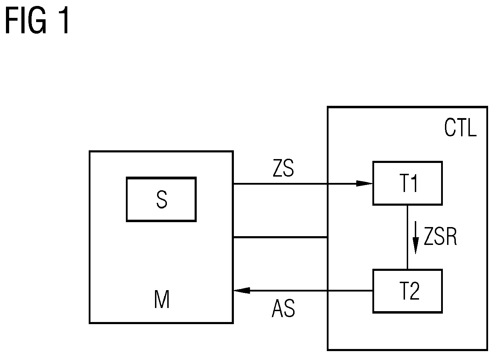

Figur 1 veranschaulicht beispielhaft einen Fertigungsroboter als zu steuernde Maschine M. Zum Steuern des Fertigungsroboters M ist dieser an eine erfindungsgemäße Maschinensteuerung CTL gekoppelt. Alternativ oder zusätzlich zum Fertigungsroboter kann als zu steuernde Maschine M auch ein Roboter, eine Fertigungsanlage, ein Motor, eine Gasturbine, eine Windturbine, eine Verbrennungskraftmaschine, eine gebäudetechnische Anlage, eine infrastrukturtechnische Anlage, ein Kraftfahrzeug oder eine andere Maschine vorgesehen sein.

Die Maschinensteuerung CTL kann als Teil des Fertigungsroboters M oder ganz oder teilweise extern zum Fertigungsroboter M implementiert sein. In den vorliegenden Figuren ist die Maschinensteuerung CTL aus Übersichtlichkeitsgründen extern zum Fertigungsroboter M dargestellt.

Die Maschinensteuerung CTL dient zum Steuern des Fertigungsroboters M und wurde zu diesem Zweck mittels maschineller Lernverfahren trainiert. Unter einem Steuern sei hierbei auch ein Regeln des Fertigungsroboters M sowie eine Ausgabe oder Verwendung von steuerungsrelevanten, d. h. zum Steuern des Fertigungsroboters M beitragenden Daten oder Signalen verstanden. Derartige steuerungsrelevante Daten oder Signale können insbesondere Steuersignale, Prognosedaten, Überwachungssignale, Zustandssignale und/oder Klassifikationsdaten umfassen, die insbesondere zur Betriebsoptimierung, Überwachung oder Wartung des Fertigungsroboters M und/oder zur Verschleiß- oder Beschädigungserkennung verwendet werden können. Der Fertigungsroboter M verfügt über eine Sensorik S, die fortlaufend einen oder mehrere Betriebsparameter des Fertigungsroboters M misst und in Form von Messwerten ausgibt. Die Messwerte der Sensorik S sowie ggf. anderweitig erfasste Betriebsparameter des Fertigungsroboters M werden als Zustandssignale ZS vom Fertigungsroboter M zur Maschinensteuerung CTL übermittelt. Durch die Zustandssignale ZS werden insbesondere ein oder mehrere aktuelle Zustände des Fertigungsroboters M vorzugsweise im Zeitverlauf angegeben, spezifiziert oder kodiert. Vorzugsweise werden durch die Zustandssignale ZS Zeitreihen von Betriebsparametern, d. h. zeitliche Abfolgen von Werten von Betriebsparametern, spezifiziert. Die Zustandssignale ZS können insbesondere physikalische, chemische, regelungstechnische, wirkungstechnische und/oder bauartbedingte Betriebsparameter, Eigenschaftsdaten, Leistungsdaten, Wirkungsdaten, Verhaltenssignale, Systemdaten, Steuerdaten, Steuersignale, Sensordaten, Messwerte, Umgebungsdaten, Überwachungsdaten, Prognosedaten, Analysedaten und/oder andere im Betrieb des Fertigungsroboters M anfallende und/oder einen Betriebszustand oder eine Steueraktion des Fertigungsroboters M beschreibende Daten umfassen. Dies können beispielsweise Positionierungsdaten, Geschwindigkeitsdaten, Rotationsdaten, Temperaturdaten, Druckdaten oder Daten über wirkende oder ausgeübte Kräfte, über eine Rotationsgeschwindigkeit, über Emissionen, über Vibrationen, über Schwingungszustände oder über einen Ressourcenverbrauch des Fertigungsroboters M sein.

Die Zustandssignale ZS werden vorzugsweise durch numerische Datenvektoren dargestellt, die jeweils einen Zustand des Fertigungsroboters M in einem typischerweise hochdimensionalen, ersten Zustandsraum spezifizieren. Der erste Zustandsraum kann dabei zum Beispiel zehn bis mehrere hundert Dimensionen aufweisen. Anhand der übermittelten Zustandssignale ZS ermittelt die trainierte Maschinensteuerung CTL Steuersignale AS, die vorzugsweise eine Performanz des Fertigungsroboters M optimieren. Die zu optimierende Performanz kann dabei insbesondere eine Präzision, eine Leistung, einen Ertrag, eine Geschwindigkeit, eine Laufzeit, eine Fehlerrate, ein Fehlerausmaß, einen Ressourcenbedarf, einen Wirkungsgrad, einen Schadstoffausstoß, eine Stabilität, einen Verschleiß, eine Lebensdauer und/oder andere Zielparameter des Fertigungsroboters M betreffen.

Zur Erzeugung geeigneter optimierter Steuersignale AS werden die Zustandssignale ZS zunächst in einen ersten Signalumsetzer T1 der Maschinensteuerung CTL eingespeist. Der erste Signalumsetzer T1 setzt die Zustandssignale ZS vom ersten Zustandsraum in einen dimensionsreduzierten, zweiten Zustandsraum zu reduzierten Zustandssignalen ZSR um. Der zweite Zustandsraum weist gegenüber dem ersten Zustandsraum vorzugsweise erheblich weniger Dimensionen auf, beispielsweise 2 bis 6. Die Umsetzung durch den ersten Signalumsetzer T1 ist - wie unten näher erläutert wird - dahingehend optimiert, dass bei der Umsetzung ein Informationsverlust minimiert wird.

Das reduzierte Zustandssignal ZSR wird vom ersten Signalumsetzer T1 in einen damit gekoppelten zweiten Signalumsetzer T2 eingespeist. Der zweite Signalumsetzer T2 ist explizit regelbasiert und setzt die reduzierten Zustandssignale ZSR mittels einer in optimierter Weise zusammengesetzten Umsetzregel in optimierte Steuersignale AS um.

Die optimierten Steuersignale AS werden vom zweiten Signalumsetzer T2 zum Fertigungsroboter M übermittelt, um diesen in optimierter Weise zu steuern. Durch ein solches Steuersignal AS kann beispielsweise ein Roboterarm des Fertigungsroboters M positioniert oder eine Rotationsgeschwindigkeit einer Achse optimiert gesteuert werden.

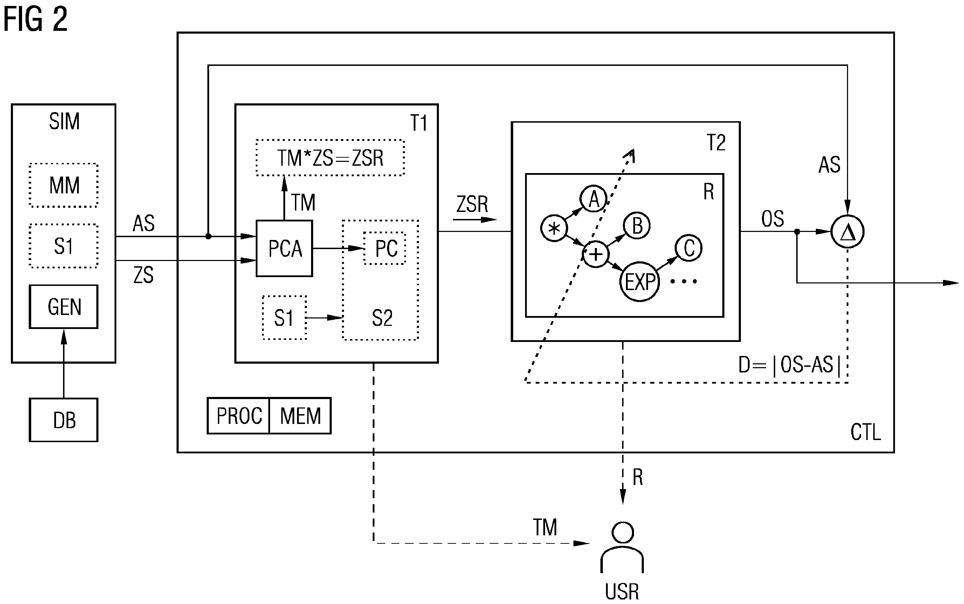

Figur 2 veranschaulicht eine erfindungsgemäße Maschinensteuerung CTL in einer Trainingsphase. Durch das Training soll die Maschinensteuerung CTL dazu befähigt werden, eine Maschine M - wie oben beschrieben - in optimierter Weise zu steuern. Die Maschinensteuerung CTL wird also durch das Training konfiguriert.

Insofern in den Figuren die gleichen oder korrespondierende Bezugszeichen verwendet werden, bezeichnen diese Bezugszeichen die gleichen oder korrespondierende Entitäten, die insbesondere, wie im Zusammenhang mit einer betreffenden Figur beschrieben, implementiert oder ausgestaltet sein können.

Die Maschinensteuerung CTL umfasst einen oder mehrere Prozessoren PROC zum Ausführen des erfindungsgemäßen Verfahrens sowie einen oder mehrere Speicherbausteine MEM zum Speichern von Verfahrensdaten.

Zum Training ist die Maschinensteuerung CTL an einen Simulator SIM zum Simulieren des Fertigungsroboters M oder einer oder mehrerer von dessen Komponenten gekoppelt. Der Simulator SIM dient dem Zweck, simulativ eine Vielzahl von Zustandssignalen ZS und zugeordneten optimierten Steuersignalen AS des Fertigungsroboters M als Trainingsdaten zum Training der Maschinensteuerung CTL zu generieren. Wie oben bereits erwähnt, spezifizieren die Zustandssignale ZS jeweils einen oder mehrere Zustände des Fertigungsroboters M vorzugsweise im Zeitverlauf. Die Zustandssignale ZS können dabei als numerische Datenvektoren in einem von der Simulation abgebildeten, ersten Zustandsraum S1 dargestellt werden. Entsprechend können die optimierten Steuersignale als Datenvektoren in einem von der Simulation abgebildeten Steueraktionsraum dargestellt werden.

Durch die Simulation soll insbesondere zu einem durch ein jeweiliges Zustandssignal ZS spezifizierten Zustand des Fertigungsroboters M, dasjenige Steuersignal ermittelt werden, das ein durch das Steuersignal induziertes Verhalten des Fertigungsroboters M nach einem vorgegebenen Kriterium optimiert. Dieses Steuersignal wird dann dem betreffenden Zustandssignal ZS als optimiertes Steuersignal AS zugeordnet.

Zu dem genannten Zweck simuliert der Simulator SIM ein Verhalten des Fertigungsroboters M für eine Vielzahl von Betriebsszenarien. Letztere können eine Vielzahl von Betriebsbedingungen und/oder Betriebszuständen umfassen, die beim Betrieb des Fertigungsroboters M auftreten können. Derartige Betriebsszenarien können insbesondere aus Betriebsdaten des Fertigungsroboters M und/oder aus einer Datenbank DB extrahiert werden. Im vorliegenden Ausführungsbeispiel wird eine Vielzahl von Betriebsszenarien und Betriebszuständen des Fertigungsroboters M durch einen Generator GEN des Simulators SIM generiert. Vorzugsweise generiert der Generator GEN im Betrieb des Fertigungsroboters M möglicherweise auftretende Zustandssignale, Trajektorien, Zeitreihen, externe Einwirkungen, Betriebsereignisse und/oder einzuhaltende Nebenbedingungen. Zur Variation der generierten Betriebsszenarien kann die Generierung auch zufallsbasiert erfolgen. Die Generierung der Betriebsszenarien basiert auf Rahmendaten oder Modelldaten für den Fertigungsroboter M, die in der Datenbank DB gespeichert sind und in den Generator GEN zum Zwecke der Generierung eingespeist werden.

Zum Simulieren des Verhaltens des Fertigungsroboters M in einem jeweils generierten Betriebsszenario verfügt der Simulator SIM über ein Simulationsmodell MM des Fertigungsroboters M. Das Simulationsmodell MM kann insbesondere geometrische, physikalische und wirkungstechnische Eigenschaften des Fertigungsroboters M modellieren. Zur effizienten physikalischen Simulation einer Maschine, hier M, anhand eines Simulationsmodells, hier MM, sind eine Vielzahl effizienter Verfahren verfügbar, wie zum Beispiel sogenannte Finite-Elemente-Verfahren oder Mehrkörper-Simulationsverfahren.

Wie oben schon erwähnt, simuliert der Simulator SIM für eine Vielzahl von möglichen Zuständen des Fertigungsroboters M sowie für eine Vielzahl von möglichen Steueraktionen jeweils ein aus Anwendung einer jeweiligen Steueraktion resultierendes Verhalten des Fertigungsroboters M. Die jeweils simulierten Verhaltensweisen werden dann durch den Simulator SIM hinsichtlich ihrer Performanz bewertet und dasjenige Steuersignal AS ermittelt, das diese Performanz optimiert. Das performanzoptimierende Steuersignal AS wird dann dem betreffenden Zustandssignal ZS zugeordnet.

Die Zustandssignale ZS werden mit ihrem jeweils zugeordneten, optimierten Steuersignal AS als Trainingsdaten vom Simulator SIM in die Maschinensteuerung CTL eingespeist. Alternativ oder zusätzlich können die Zustandssignale ZS und die optimierten Steuersignale AS auch vom Fertigungsroboter M selbst, von einem dazu ähnlichen Fertigungsroboter oder von einer Datenbank in die Maschinensteuerung CTL eingespeist werden.

Mittels der Trainingsdaten ZS und AS wird die Maschinensteuerung CTL trainiert. Unter einem Training sei hierbei allgemein eine Optimierung einer Abbildung von Eingabesignalen auf Ausgabesignale verstanden. Diese Abbildung wird nach vorgegebenen und/oder gelernten Kriterien während einer Trainingsphase optimiert. Als Kriterien können hierbei zum Beispiel bei Prädiktionsmodellen ein Prädiktionsfehler oder Reproduktionsfehler, bei Klassifikationsmodellen ein Klassifikationsfehler, bei Steuermodellen eine Abweichung von einer optimierten Steueraktion und/oder bei Umsetzmodellen eine Minimierung eines Informationsverlusts herangezogen werden. Durch das Training können beispielsweise Modellparameter, Verfahrensparameter, Vernetzungsstrukturen von Neuronen eines neuronalen Netzes und/oder Gewichte von Verbindungen zwischen den Neuronen so eingestellt bzw. optimiert werden, dass die Kriterien möglichst gut erfüllt werden. Das Training kann somit als Optimierungsproblem aufgefasst werden. Für derartige Optimierungsprobleme ist eine Vielzahl von effizienten Optimierungsverfahren verfügbar. Insbesondere können genetische Optimierungsverfahren, Gradientenabstiegsverfahren, Hauptkomponentenanalyseverfahren und/oder Partikelschwarmoptimierungen verwendet werden.

Erfindungsgemäß verfügt die Maschinensteuerung CTL über einen ersten Signalumsetzer T1 und einen zweiten Signalumsetzer T2, die anhand der Trainingsdaten ZS und AS trainiert werden sollen.

Der erste Signalumsetzer T1 wird im vorliegenden Ausführungsbeispiel darauf trainiert, eine Transformationsmatrix TM zu ermitteln, die ein jeweiliges Zustandssignal ZS vom ersten Zustandsraum S1 in einen demgegenüber dimensionsreduzierten, zweiten Zustandsraum S2 auf ein reduziertes Zustandssignal ZSR abbildet. Dabei soll ein auftretender Informationsverlust minimiert werden. Der zweite Zustandsraum S2 weist - wie oben bereits erwähnt - eine erheblich geringere Dimension auf als der erste Zustandsraum S1.

Die Abbildung eines jeweiligen Zustandssignals ZS auf das zugehörige reduzierte Zustandssignal ZSR erfolgt durch Matrixmultiplikation eines das jeweilige Zustandssignal ZS im ersten Zustandsraum S1 darstellenden Vektors mit der Transformationsmatrix TM. Das Ergebnis dieser Multiplikation ist dann ein das zugehörige reduzierte Zustandssignal ZSR im zweiten Zustandsraum S2 darstellender Vektor. Das heißt ZSR = TM * ZS, wobei zur Vereinfachung der Notation die darstellenden Vektoren mit den gleichen Bezugszeichen wie die dargestellten Zustandssignale ZS bzw. ZSR bezeichnet wurden.

Die Matrixelemente der Transformationsmatrix TM und ggf. deren Zeilenanzahl werden dahingehend optimiert, dass ein bei der Transformation auftretender Informationsverlust minimiert wird. Dies kann beispielsweise dadurch erfolgen, dass für Variationen der Matrixelemente jeweils ein Informationsverlust für eine Vielzahl von Transformationen ermittelt wird und auf diese Weise ein Satz von Matrixelementen bestimmt wird, der den Informationsverlust minimiert. Als Maß für den Informationsverlust kann beispielsweise ermittelt werden, wie gut sich aus reduzierten Zustandssignalen ZSR die ursprünglichen Zustandssignale ZS reproduzieren lassen. Im vorliegenden Ausführungsbeispiel wird die Transformationsmatrix TM durch eine Hauptkomponentenanalyse PCA ermittelt. Zur Durchführung einer derartigen Hauptkomponentenanalyse steht eine Vielzahl numerischer Standardverfahren, zum Beispiel zur Singulärwertzerlegung, zur Verfügung.

Zur Hauptkomponentenanalyse PCA werden dem ersten Signalumsetzer T1 die Zustandssignale ZS sowie die zugehörigen optimierten Steuersignale AS zugeführt. Die Hauptkomponentenanalyse PCA wird vorteilhafterweise für die Zustandssignale ZS und die Steuersignale AS gemeinsam ausgeführt. Zu diesem Zweck wird die Transformationsmatrix TM um zusätzliche Spalten zur Multiplikation mit einem ein Steuersignal darstellenden Vektor erweitert.

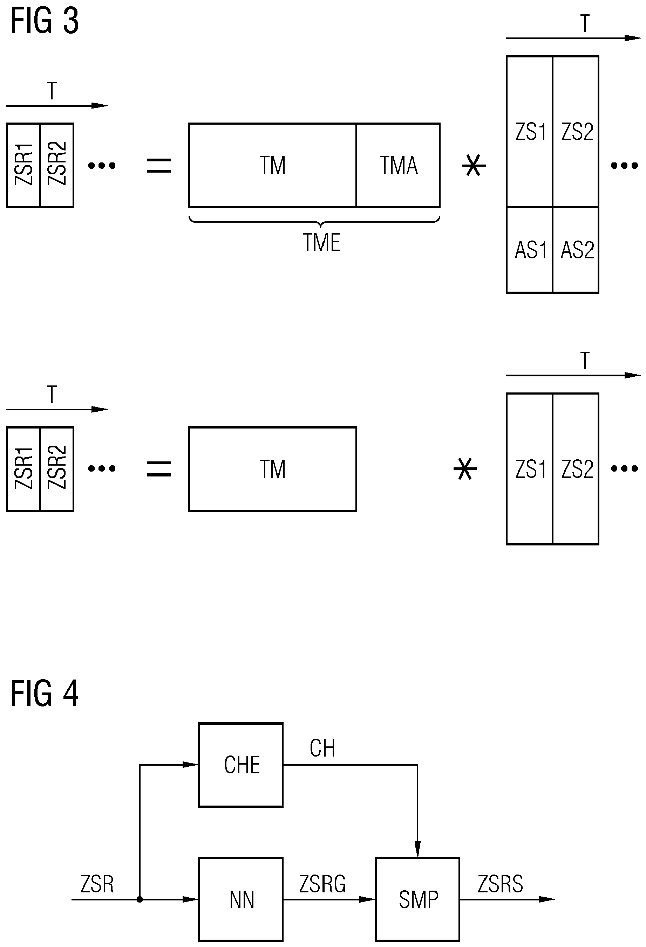

Eine Umsetzung von Zustandssignalen ZS und ggf. zugeordneten optimierten Steuersignalen AS durch die Transformationsmatrix TM bzw. eine erweiterte Transformationsmatrix TME wird in Figur 3 veranschaulicht. Der obere Teil von Figur 3 veranschaulicht dabei eine Umsetzung durch eine um zusätzliche Spalten TMA erweiterte Transformationsmatrix TME, wie sie für die Hauptkomponentenanalyse PCA verwendet wird. Dabei veranschaulichen ZS1, ZS2, ... jeweils einen ein Zustandssignal darstellenden Vektor und AS1, AS2, ... jeweils einen ein Steuersignal darstellenden Vektor im Zeitverlauf T. Entsprechend der Erweiterung der Transformationsmatrix TM um die zusätzlichen Spalten TMA werden die Vektoren ZS1, ZS2, ... jeweils um einen zugeordneten Vektor AS1 bzw. AS2, ... zu einem erweiterten Vektor ergänzt, der jetzt ein Zustandssignal und sein zugeordnetes Steuersignal gemeinsam darstellt. Die erweiterten Vektoren (ZS1, AS2), (ZS2, AS2), ... werden jeweils mit der erweiterten Transformationsmatrix TME multipliziert, um als Resultat der Matrixmultiplikationen jeweils einen reduzierten Zustandsvektor ZSR1 bzw. ZSR2, ... zu erhalten. Dabei werden gewissermaßen die Vektoren ZS1, ZS2, ... mit der nicht erweiterten Transformationsmatrix TM und die Vektoren AS1, AS2, ... mit den zusätzlichen Spalten TMA multipliziert.

Wie oben bereits erwähnt, wird die Hauptkomponentenanalyse PCA für die erweiterte Transformationsmatrix TME durchgeführt. In der durch die Hauptkomponentenanalyse PCA bestimmten erweiterten Transformationsmatrix TME werden dann die erweiterten Spalten TMA wieder entfernt, sodass nur die Transformationsmatrix TM übrig bleibt. Die resultierende Transformationsmatrix TM wird dann zur Multiplikation mit nicht erweiterten Zustandsvektoren ZS1, ZS2, ... verwendet, um bestimmungsgemäß vom ersten Zustandsraum S1 in den reduzierten, zweiten Zustandsraum S2 umzusetzen. Diese Umsetzung durch die Transformationsmatrix TM wird im unteren Teil von Figur 3 veranschaulicht.

Mittels der trainierten Transformationsmatrix TM werden Zustandssignale ZS auf ihre durch die Hauptkomponentenanalyse PCA gefundenen Hauptkomponenten PC abgebildet. Die Hauptkomponenten PC spannen hierbei gewissermaßen den zweiten Zustandsraum S2 auf.

Die gemeinsame Hauptkomponentenanalyse PCA von Zustandssignalen ZS mit ihren zugeordneten optimierten Steuersignalen AS ist insofern vorteilhaft, da auf diese Weise auch Korrelationen zwischen Zustandssignalen ZS und Steuersignalen AS erkannt und zur effizienten Dimensionsreduktion genutzt werden können.

Wie Figur 2 weiter veranschaulicht, werden die durch Umsetzung der Zustandssignale ZS mittels der Transformationsmatrix TM erhaltenen reduzierten Zustandssignale ZSR vom ersten Signalumsetzer T1 zu einem zweiten Signalumsetzer T2 der Maschinensteuerung CTL übermittelt. Insofern einem jeweiligen Zustandssignal ZS ein optimiertes Steuersignal AS zugeordnet ist, ist letzteres auch dem aus diesem Zustandssignal ZS umgesetzten reduzierten Steuersignal ZSR zugeordnet.

Der zweite Signalumsetzer T2 soll darauf trainiert werden, reduzierte Zustandssignale mittels einer expliziten Umsetzregel R in optimierte Steuersignale umzusetzen. Zu diesem Zweck wird eine Vielzahl von reduzierten Zustandssignalen ZSR jeweils gemäß der Umsetzregel R umgesetzt und ein sich jeweils daraus ergebendes Ausgabesignal OS des zweiten Signalumsetzers T2 mit dem jeweils zugeordneten optimierten Steuersignal AS verglichen. Die Umsetzregel R wird dann so optimiert oder parametrisiert, dass ein Abstand D zwischen den Ausgabesignalen OS und den jeweils zugeordneten optimierten Steuersignalen AS minimiert wird.

Die Umsetzregel R wird im Rahmen des Trainings des zweiten Signalumsetzers T2 aus diskreten Regelelementen zusammengesetzt, die im vorliegenden Ausführungsbeispiel insbesondere numerische Operatoren umfassen. Als numerische Operatoren können beispielsweise Addition, Subtraktion, Multiplikation, Division, Exponenzierung, eine Sinusfunktion und/oder eine Cosinusfunktion eingesetzt werden. Die Operatoren werden jeweils durch eine spezifische Operatorkennung, vorzugsweise ein gebräuchliches Operatorsymbol, kodiert. In Figur 2 sind einige beispielhafte Operatoren durch die Operatorsymbole +, * und EXP gekennzeichnet. Die Operatoren wirken auf Operanden A, B und C.

Die Umsetzregel R umfasst im vorliegenden Ausführungsbeispiel eine oder mehrere Abfolgen von numerischen Operatoren, die vorzugsweise als sogenannter Ausdrucksbaum oder algorithmischer Baum strukturiert sind. Ein solcher Ausdrucksbaum wird durch eine baumförmig verlinkte Datenstruktur aus kodierten Operatoren, Operanden und ggf. numerischen Parametern gebildet. Die Operatoren wirken in Verlinkungsrichtung auf Operanden oder auf Ergebnisse von verlinkten Operationen. Durch einen Ausdrucksbaum wird ein symbolischer mathematischer Ausdruck bzw. eine explizite symbolische Formel kodiert. Insbesondere kann ein Ausdrucksbaum mit mehreren Operanden als multivariate Funktion aufgefasst werden.

Im vorliegenden Ausführungsbeispiel wird die Umsetzung des zweiten Signalumsetzers T2 durch den Ausdrucksbaum der Umsetzregel R festgelegt. Die Umsetzregel R bildet damit eine im Allgemeinen nichtlineare multivariate Funktion, die durch den zweiten Signalumsetzer T2 numerisch ausgewertet wird.

Die Umsetzregel R bildet dabei einen jeweiligen, ein reduziertes Zustandssignal ZSR im zweiten Zustandsraum S2 darstellenden Vektor auf ein Ausgabesignal OS im Steueraktionsraum ab gemäß R(ZSR) = OS. Zusammen mit der Umsetzung durch den ersten Signalumsetzer T1 ergibt sich also OS = R(TM*ZS). Zur Vereinfachung der Notation wurde hierbei nicht zwischen den darstellenden Vektoren und den dargestellten Größen unterschieden.

Zur Optimierung der Umsetzregel R wird eine symbolische Regression für den Ausdrucksbaum durchgeführt. Letzterer wird dabei mit dem Ziel variiert, eine Umsetzregel R zu finden, die ein reduziertes Zustandssignal ZSR in möglichst vorteilhafte Steuersignale umsetzt. Zu diesem Zweck wird eine Vielzahl unterschiedlicher Abfolgen von Operatoren und Operanden ggf. mit unterschiedlichen Parametrisierungen generiert. Wie oben bereits angedeutet, werden für jede Abfolge die durch Anwendung der Abfolge auf die reduzierten Zustandssignale ZSR erzeugten Ausgabesignale OS mit dem einem jeweiligen reduzierten Zustandssignal ZSR zugeordneten optimierten Steuersignal AS verglichen. Dabei wird ein Abstand D zwischen dem jeweiligen Ausgabesignal OS und dem korrespondierenden optimierten Steuersignal AS ermittelt, zum Beispiel gemäß D = | OS - AS | oder D = (OS - AS)². Der Abstand D wird - wie in Figur 2 durch einen punktierten Pfeil angedeutet - zum zweiten Signalumsetzer T2 zurückgeführt, um dort eine Operatorabfolge zu selektieren oder zu optimieren, die den Abstand D minimiert. Zur Minimierung wird vorzugsweise ein genetisches Optimierungsverfahren verwendet. Für derartige genetische Optimierungsverfahren stehen eine Vielzahl von effizienten Implementierungen zur Verfügung.

Durch die Optimierung der Umsetzregel R wird der zweite Signalumsetzer T2 darauf trainiert, die optimierten Steuersignale AS möglichst genau zu reproduzieren. In vielen Fällen können die optimierten Steuersignale AS mit einer Genauigkeit von 1% oder weniger reproduziert werden. Nach einem erfolgreichen Training können somit die Ausgabesignale OS des zweiten Signalumsetzers T2 als optimierte Steuersignale ausgegeben und zum optimierten Steuern des Fertigungsroboters M verwendet werden.

Die Hintereinanderschaltung des ersten Signalumsetzers T1 und des zweiten Signalumsetzers T2 bildet eine sogenannte Machine-Learning-Pipeline. Durch das Training werden der erste Signalumsetzer T1 und der zweite Signalumsetzer T2 und damit die Maschinensteuerung CTL trainiert und konfiguriert. Die beiden Signalumsetzer T1 und T2 können dabei vorzugsweise gemeinsam trainiert werden.

Die durch das Training optimierte Transformationsmatrix TM sowie die durch das Training optimierte Umsetzregel R können vorteilhafterweise vom ersten Signalumsetzer T1 bzw. vom zweiten Signalumsetzer T2 zu einem Benutzer USR der Maschinensteuerung CTL ausgegeben werden. Sowohl die Transformationsmatrix TM als auch die Umsetzregel R sind aufgrund ihrer expliziten Darstellung durch den Benutzer USR leicht interpretierbar. Insbesondere bildet die Umsetzregel R eine explizite heuristische Steuerregel, die analytisch nachvollziehbar, zertifizierbar und weiterentwickelbar ist. Dies stellt einen erheblichen Vorteil gegenüber datengetriebenen Modellen wie zum Beispiel neuronalen Netzen dar, deren Transformationen in der Regel kaum analytisch nachvollziehbar sind.

Für eine schnelle Anpassung der Maschinensteuerung CTL an unterschiedliche Betriebsbedingungen des Fertigungsroboters M können mehrere betriebsbedingungsspezifische zweite Signalumsetzer T2 vorgesehen sein, die für eine jeweilige Betriebsbedingung betriebsbedingungsspezifisch trainiert werden. Sobald dann eine aktuelle Betriebsbedingung für den Fertigungsroboter M detektiert oder erfasst wird, kann ein für diese aktuelle Betriebsbedingung spezifisch trainierter zweiter Signalumsetzer T2 selektiert werden.

Darüber hinaus kann das Training des zweiten Signalumsetzers T2 oft dadurch verbessert werden, dass eine Vielzahl von synthetischen reduzierten Zustandssignalen zusätzlich generiert und zum Training verwendet werden. Eine solche Generierung von synthetischen reduzierten Zustandssignalen ZSRS wird in Figur 4 veranschaulicht.

Zum Zweck dieser Generierung wird ein Maschinenlernmodul NN, zum Beispiel ein neuronales Netz, anhand einer Vielzahl von reduzierten Zustandssignalen ZSR darauf trainiert, synthetische reduzierte Zustandssignale ZSRG zu generieren, die reduzierten Zustandssignalen ZSR nach vorgegebenen Kriterien möglichst ähnlich sind und/oder eine ähnliche statistische Verteilung aufweisen. Zur Generierung neuer Varianten von reduzierten Zustandssignalen kann das Maschinenlernmodul NM insbesondere durch Zufallssignale angeregt werden. Zum Training eines solchen Maschinenlernmoduls NM stehen eine Vielzahl bekannter Verfahren zur Verfügung.

Die zum Training des Maschinenlernmoduls NN benutzten reduzierten Zustandsdaten ZSR werden zusätzlich in einen Extraktor CHE eingespeist, der eine konvexe Hülle CH der reduzierten Zustandsdaten im zweiten Zustandsraum ermittelt und extrahiert.

Die vom Maschinenlernmodul NN generierten synthetischen reduzierten Zustandssignale ZSRG sowie die konvexe Hülle CH werden in eine Sampling-Einrichtung SMP eingespeist. Durch die Sampling-Einrichtung SMP werden die synthetischen reduzierten Zustandssignale ZSRG durch Interpolation innerhalb der komplexen Hülle CH auf einem vorzugsweisen äquidistanten Raster des Zustandsraums S2 gesampelt. Die gesampelten synthetischen reduzierten Zustandssignale ZSRS werden dann durch die Sampling-Einrichtung SMP ausgegeben und als zusätzliche reduzierte Zustandssignale zum Training des zweiten Signalumsetzers T2 verwendet.

Durch die Vergrößerung der Menge an Trainingsdaten sowie durch deren äquidistantes Sampling werden Auswirkungen statistischer Ausreißer auf effiziente Weise minimiert. Darüber hinaus wird eine Hyperfläche der reduzierten Zustandsdaten ZSR im zweiten Zustandsraum S2 effektiv geglättet. Es erweist sich, dass auf diese Weise das Training des zweiten Signalumsetzers S2 in vielen Fällen erheblich beschleunigt werden kann.

## Patentansprüche

1. Computerimplementiertes Verfahren zum Konfigurieren einer Maschinensteuerung (CTL) für eine Maschine (M), wobei
a) eine Vielzahl von jeweils einen Zustand der Maschine (M) in einem ersten Zustandsraum (S1) spezifizierenden Zustandssignalen (ZS) eingelesen wird, denen jeweils ein für den jeweiligen Zustand optimiertes Steuersignal (AS) zugeordnet ist,
b) anhand der Vielzahl von Zustandssignalen (ZS) ein erster Signalumsetzer (T1) darauf trainiert wird, Zustandssignale (ZS) aus dem ersten Zustandsraum (S1) in einen demgegenüber dimensionsreduzierten, zweiten Zustandsraum (S2) zu reduzierten Zustandssignalen (ZSR) umzusetzen, wobei ein Informationsverlust minimiert wird,
c) ein zweiter Signalumsetzer (T2) durch Zusammensetzen einer Umsetzregel (R) aus diskreten Regelelementen (*,+,EXP,...) darauf trainiert wird, durch Umsetzen von reduzierten Zustandssignalen (ZSR) mittels der Umsetzregel (R) korrespondierende optimierte Steuersignale (AS) zu reproduzieren,
d) die Maschinensteuerung (CTL) dazu eingerichtet wird, ein Zustandssignal (ZS) der Maschine (M) durch den trainierten ersten Signalumsetzer (T1) in ein reduziertes Zustandssignal (ZSR) und dieses durch den trainierten zweiten Signalumsetzer (T2) in ein optimiertes Steuersignal (AS) umzusetzen, mittels dessen die Maschine (M) gesteuert wird.

2. Verfahren nach Anspruch 1, **dadurch gekennzeichnet,**
**dass** ein Verhalten der Maschine für eine Vielzahl von Betriebsszenarien simuliert wird,
**dass** für einen jeweiligen simulierten Zustand der Maschine (M) ein Steuersignal ermittelt wird, das ein hierdurch induziertes simuliertes Verhalten der Maschine (M) optimiert, und dass das ermittelte Steuersignal dem korrespondierenden Zustandssignal (ZS) als optimiertes Steuersignal (AS) zugeordnet wird.

3. Verfahren nach einem der vorhergehenden Ansprüche, **dadurch gekennzeichnet,**
**dass** die Vielzahl von Zustandssignalen (ZS) und/oder zugeordneten optimierten Steuersignalen (AS) von der Maschine (M), von einer dazu ähnlichen Maschine, von einer Simulation der Maschine (M) und/oder aus einer Datenbank (DB) eingelesen werden.

4. Verfahren nach einem der vorhergehenden Ansprüche, **dadurch gekennzeichnet,**
**dass** die Zustandssignale (ZS) durch den ersten Signalumsetzer (T1) vom ersten Zustandsraum (S1) linear in den zweiten Zustandsraum (S2) umgesetzt werden.

5. Verfahren nach einem der vorhergehenden Ansprüche, **dadurch gekennzeichnet,**
**dass** zum Training des ersten Signalumsetzers (T1) eine Hauptkomponentenanalyse bei der Vielzahl von Zustandssignalen (ZS) durchgeführt wird, und
**dass** der erste Signalumsetzer (T1) zum Abbilden von Zustandssignalen (ZS) auf die gefundenen Hauptkomponenten der Zustandssignale (ZS) eingerichtet wird.

6. Verfahren nach Anspruch 5, **dadurch gekennzeichnet,**
**dass** bei der Hauptkomponentenanalyse ein jeweiliges Zustandssignal (ZS) gemeinsam mit dem jeweils zugeordneten optimierten Steuersignal (AS) ausgewertet wird.

7. Verfahren nach einem der vorhergehenden Ansprüche, **dadurch gekennzeichnet,**
**dass** die diskreten Regelelemente (+,*,EXP,...) numerische Operatoren umfassen, und
**dass** zum Training des zweiten Signalumsetzers (T2) eine symbolische Regression mit den numerischen Operatoren durchgeführt wird.

8. Verfahren nach einem der vorhergehenden Ansprüche, **dadurch gekennzeichnet,**
**dass** die diskreten Regelelemente (+,*,EXP,...) numerische Operatoren umfassen, und
**dass** zum Training des zweiten Signalumsetzers (T2)
- unterschiedliche Abfolgen der numerischen Operatoren generiert werden,
- die reduzierten Zustandssignale (ZSR) gemäß einer jeweiligen Abfolge in Ausgabesignale (OS) umgesetzt werden,
- eine Abfolge ermittelt wird, bei der ein Abstand der Ausgabesignale (OS) von den korrespondierenden optimierten Steuersignalen (AS) minimiert wird, und
- die Umsetzregel (R) anhand der ermittelten Abfolge gebildet wird.

9. Verfahren nach einem der vorhergehenden Ansprüche, **dadurch gekennzeichnet,**
**dass** zum Training des zweiten Signalumsetzers (T2) ein genetisches Optimierungsverfahren verwendet wird.

10. Verfahren nach einem der vorhergehenden Ansprüche, **dadurch gekennzeichnet,**
**dass** für unterschiedliche Betriebsbedingungen der Maschine (M) jeweils betriebsbedingungsspezifische Zustandssignale und/oder betriebsbedingungsspezifisch optimierte Steuersignale eingelesen werden,
**dass** für die unterschiedlichen Betriebsbedingungen anhand der jeweiligen betriebsbedingungsspezifischen Zustandssignale und/oder betriebsbedingungsspezifisch optimierten Steuersignale jeweils ein betriebsbedingungsspezifischer zweiter Signalumsetzer trainiert wird,
**dass** eine Betriebsbedingung der Maschine (M) erfasst wird, und
**dass** einer der betriebsbedingungsspezifischen zweiten Signalumsetzer abhängig von der erfassten Betriebsbedingung zum Steuern der Maschine (M) selektiert wird.

11. Verfahren nach einem der vorhergehenden Ansprüche, **dadurch gekennzeichnet,**
**dass** ein Maschinenlernmodul (NN) anhand von reduzierten Zustandssignalen (ZSR) darauf trainiert wird, synthetische reduzierte Zustandssignale (ZSRS) zu generieren, und
**dass** zum Training des zweiten Signalumsetzers (T2) zusätzlich die generierten synthetischen reduzierten Zustandssignale (ZSRS) verwendet werden.

12. Maschinensteuerung (CTL) zum Steuern einer Maschine (M), eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.
